# EUROPEAN PATENT APPLICATION

(11) **EP 4 459 597 A1**
(43) Date of publication of application: **06.11.2024**
(21) Application number: 24165944.0
(22) Date of filing: 25.03.2024
(51) Int. Cl.: G08G 5/00, G06N 20/00

(54) **SYSTEMS AND METHODS FOR IN-AIR TRAFFIC TRACKING AND AIRCRAFT COMPRISING SUCH SYSTEMS**

(30) Priority: 18.04.2023 US 202318302367
(71) Applicant: Honeywell International Inc., Charlotte, NC 28202 (US)
(72) Inventor: HE, Ye, Charlotte, NC 28202 (US); HE, Gang, Charlotte, NC 28202 (US)
(74) Representative: Lucas, Peter Lawrence

(57) **Abstract**

Systems and methods are provided for in-air traffic tracking onboard an ownship. The system includes a display device, a sensor system configured to sense a sensed three-dimensional (3D) position of a target aircraft, a communication system configured to receive in-air traffic position data from an external source that includes a tracked 3D position of the target aircraft, and an in-air traffic tracking system that includes a controller configured to, by a processor: determine a predicted 3D position of the target aircraft by adjusting the tracked 3D position with compensation parameters, wherein the compensation parameters are determined based on a trained machine learning, determine a real-time 3D position of the target aircraft based on the sensed 3D position and/or the predicted 3D position, and render a tracking icon on the display device that indicates the real-time 3D position of the target aircraft.

## Description

### TECHNICAL FIELD

The present invention generally relates to aircraft systems, and more particularly relates to systems and methods for indicating a real-time three-dimensional (3D) position of an aircraft on a display device onboard an ownship.

### BACKGROUND

Various aircraft include a Synthetic Vision System (SVS) display that provides graphical renderings of terrain and other geographical features representing a first-person view from the cockpit under ideal visibility conditions (a so-called "glass cockpit" view). The SVS display may include a three-dimensional (3D) in-air traffic system that uses Automatic Dependent Surveillance-Broadcast (ADS-B) data to determine a position of a target aircraft and render an in-air traffic icon on the SVS display indicating and tracking the target aircraft. The 3D in-air traffic system is intended to enhance pilots' traffic spatial situation awareness by highlighting the position of the target aircraft.

However, the in-air traffic icon may not match the real airborne traffic as viewed by the pilots from the cockpit due to signal latencies. Specifically, the 3D in-air traffic system must receive traffic data from an ADS-B receiver onboard the aircraft, process the traffic data, and then render the in-air traffic icon based on the traffic data. Typically, this process can result in up to a 3.5 second latency. Such a mismatch can reduce crew confidence in the displayed information.

Hence, there is a need for systems and methods that improve 3D in-air traffic systems such that target aircraft are more accurately tracked. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A system is provided for in-air traffic tracking onboard an ownship. The system comprises a display device, a sensor system configured to sense a sensed three-dimensional (3D) position of a target aircraft that is in-air, a communication system configured to receive in-air traffic position data from an external source external to the ownship, wherein the in-air traffic position data includes a tracked 3D position of the target aircraft, and an in-air traffic tracking system that includes a controller that is in operable communication with the display device, the sensor system, and the communication system. The controller is configured to, by a processor: determine a predicted 3D position of the target aircraft by adjusting the tracked 3D position with compensation parameters, wherein the compensation parameters are determined based on a trained machine learning algorithm that is trained based on comparisons between a plurality of sensed 3D positions of in-air aircraft and a corresponding plurality of tracked 3D positions of the in-air aircraft as received from the external source, determine a real-time 3D position of the target aircraft based on the sensed 3D position and/or the predicted 3D position, and render a tracking icon on the display device that indicates the real-time 3D position of the target aircraft.

A method is provided for indicating a real-time three-dimensional (3D) position of a target aircraft that is in-air on a display device onboard an ownship. The method comprises sensing, with a sensor system onboard the ownship, a sensed three-dimensional (3D) position of the target aircraft, receiving, with a communication system onboard the ownship, in-air traffic position data from an external source that is external to the ownship that includes a tracked 3D position of the target aircraft, determining, by a processor onboard the ownship and in operable communication with the sensor system, the communication system, and the display device, a predicted 3D position of the target aircraft by adjusting the tracked 3D position with compensation parameters, wherein the compensation parameters are determined based on a trained machine learning algorithm that is trained based on comparisons between a plurality of sensed 3D positions of in-air aircraft and a corresponding plurality of tracked 3D positions of the in-air aircraft as received from the external source, determining, by the processor, the real-time 3D position of the target aircraft based on the sensed 3D position and/or the predicted 3D position, and rendering, by the processor, a tracking icon on the display device that indicates the real-time 3D position of the target aircraft.

An aircraft is provided that comprises a display device, a sensor system configured to sense a sensed three-dimensional (3D) position of a target aircraft that is in-air using an optical camera system and a radar system of the sensor system, a communication system configured to receive in-air traffic position data from an Automatic Dependent Surveillance - Broadcast (ADS-B) system external to the aircraft, wherein the in-air traffic position data includes a tracked 3D position of the target aircraft, and an in-air traffic tracking system that includes a controller operably coupled to the display device, the sensor system, and the communication system. The controller is configured to, by a processor: determine a predicted 3D position of the target aircraft by adjusting the tracked 3D position with compensation parameters, wherein the compensation parameters are determined based on a trained machine learning algorithm that is trained based on comparisons between a plurality of sensed 3D positions of in-air aircraft and a corresponding plurality of tracked 3D positions of the in-air aircraft as received from the ADS-B system, determine a real-time 3D position of the target aircraft based on the sensed 3D position and/or the predicted 3D position, and render a tracking icon on the display device that indicates the real-time 3D position of the target aircraft.

Furthermore, other desirable features and characteristics of the system, method, and aircraft will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram representing an exemplary aircraft having an in-air traffic tracking system in accordance with an embodiment;
FIG. 2 is a dataflow diagram illustrating operation of the in-air traffic tracking system of FIG. 1 in accordance with an embodiment;
FIG. 3 is a flowchart illustrating an exemplary method for indicating a real-time three-dimensional (3D) position of an aircraft on a display device in accordance with an embodiment; and
FIG. 4 is an avionics display including a visual tracking icon representing indicating a real-time three-dimensional (3D) position of an aircraft in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

Systems and methods disclosed herein provide for efficiently and clearly indicating a real-time three-dimensional (3D) position of one or more target aircraft that are in-air (i.e., in flight) on a display device of an ownship. It should be noted that the term aircraft (and ownship), as utilized herein, may include any manned or unmanned object capable of flight. Examples of aircraft may include, but are not limited to, fixed-wing aerial vehicles (e.g., propeller-powered or jet powered), rotary-wing aerial vehicles (e.g., helicopters), manned aircraft, unmanned aircraft (e.g., unmanned aerial vehicles, or UAVs), delivery drones, etc. For convenience, the systems and methods will be described in reference to a manned airplane; however, as noted the systems and methods are not limited to such application.

The systems may be configured to determine the real-time 3D position of the other aircraft (also referred to herein as the target aircraft) based on information received from a sensor system of the ownship and/or based on information received from another source external to the ownship. When determining the real-time 3D position of the target aircraft based on the information received from another source external to the ownship, the information may be adjusted with compensation parameters provided by a trained machine learning algorithm.

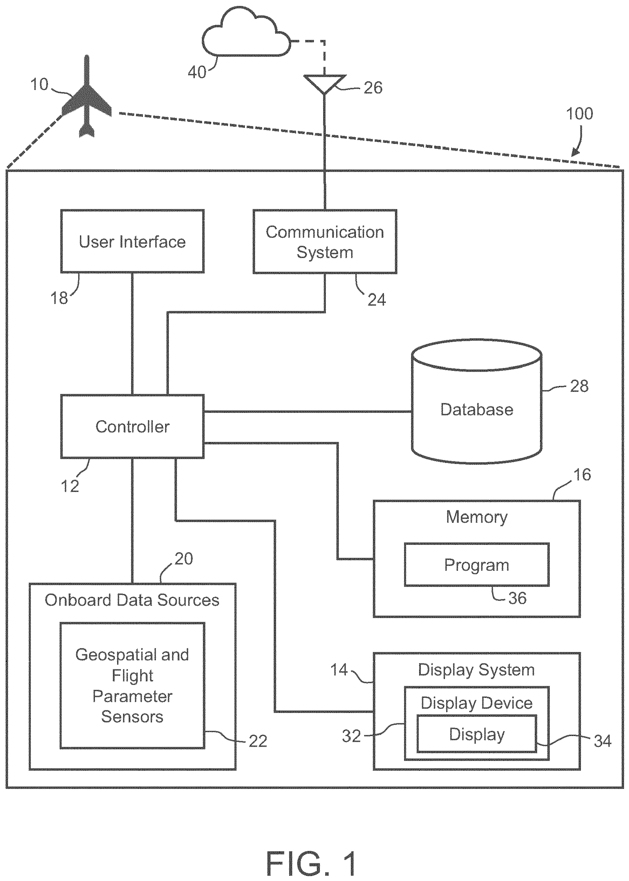

Referring now to FIG. 1, an aircraft 10 (also referred to herein as the ownship 10), such as an airplane, and certain systems thereof are illustrated in accordance with an exemplary and non-limiting embodiment of the present disclosure. An in-air traffic tracking system 100 may be utilized onboard the aircraft 10 as described herein. As schematically depicted in FIG. 1, the system 100 includes and/or is functionally coupled to the following components or subsystems, each of which may assume the form of a single device or multiple interconnected devices, including, but not limited to, a controller 12 operationally coupled to: at least one display device 32, which may optionally be part of a larger on-board display system 14; computer-readable storage media or memory 16; an optional user interface 18, and ownship data sources 20 including, for example, an array of flight system status and geospatial sensors 22. The system 100 may be separate from or integrated within a flight management system (FMS) and/or a flight control system (FCS). The system 100 may also contain a communication system 24 including an antenna 26, which may wirelessly transmit data to and receive data from various sources external to the system 100.

Although schematically illustrated in FIG. 1 as a single unit, the individual elements and components of the system 100 can be implemented in a distributed manner utilizing any practical number of physically distinct and operatively interconnected pieces of hardware or equipment. When the system 100 is utilized as described herein, the various components of the system 100 will typically all be located onboard the aircraft 10.

The term "controller," as appearing herein, broadly encompasses those components utilized to carry-out or otherwise support the processing functionalities of the system 100. Accordingly, the controller 12 can encompass or may be associated with any number of individual processors, flight control computers, navigational equipment pieces, computer-readable memories (including or in addition to the memory 16), power supplies, storage devices, interface cards, and other standardized components.

In various embodiments, the controller 12 includes at least one processor, a communication bus, and a computer readable storage device or media. The processor performs the computation and control functions of the controller 12. The processor can be any custom made or commercially available processor, a central processing unit (CPU), a graphics processing unit (GPU), an auxiliary processor among several processors associated with the controller 12, a semiconductor-based microprocessor (in the form of a microchip or chip set), any combination thereof, or generally any device for executing instructions. The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the controller 12. The bus serves to transmit programs, data, status and other information or signals between the various components of the aircraft 10. The bus can be any suitable physical or logical means of connecting computer systems and components. This includes, but is not limited to, direct hard-wired connections, fiber optics, infrared, and wireless bus technologies.

The instructions may include one or more separate programs, each of which comprises an ordered listing of executable instructions for implementing logical functions. The instructions, when executed by the processor, receive and process signals from the sensors 22, perform logic, calculations, methods and/or algorithms, and generate data based on the logic, calculations, methods, and/or algorithms. Although only one controller 12 is shown in FIG. 1, embodiments of the aircraft 10 can include any number of controllers 12 that communicate over any suitable communication medium or a combination of communication mediums and that cooperate to process the sensor signals, perform logic, calculations, methods, and/or algorithms, and generate data. In various embodiments, the controller 12 includes or cooperates with at least one firmware and software program (generally, computer-readable instructions that embody an algorithm) for carrying-out the various process tasks, calculations, and control/display functions described herein. During operation, the controller 12 may be programmed with and execute at least one firmware or software program, for example, a program 36, that embodies one or more algorithms, to thereby perform the various process steps, tasks, calculations, and control/display functions described herein.

The controller 12 may exchange data with one or more external sources 40 to support operation of the system 100 in various embodiments. In this case, bidirectional wireless data exchange may occur via the communication system 24 over a communications network, such as a public or private network implemented in accordance with Transmission Control Protocol/Internet Protocol architectures or other conventional protocol standards. Encryption and mutual authentication techniques may be applied, as appropriate, to ensure data security.

In various embodiments, the communication system 24 is configured to support instantaneous (i.e., real time or current) communications between on-board systems, the controller 12, and the one or more external source(s) 40. The communication system 24 may incorporate one or more transmitters, receivers, and the supporting communications hardware and software required for components of the system 100 to communicate as described herein. In various embodiments, the communication system 24 may have additional communications not directly relied upon herein, such as bidirectional pilot-to-ATC (air traffic control) communications via a datalink, and any other suitable radio communication system that supports communications between the aircraft 10 and various external source(s).

The memory 16 can encompass any number and type of storage media suitable for storing computer-readable code or instructions, such as the program 36, as well as other data generally supporting the operation of the system 100. As can be appreciated, the memory 16 may be part of the controller 12, separate from the controller 12, or part of the controller 12 and part of a separate system. The memory 16 can be any suitable type of storage apparatus, including various different types of direct access storage and/or other memory devices.

A source of information suitable for determining real-time 3D positions of other aircraft and/or displaying various environmental renderings during operation of the ownship 10 may be part of the system 100. In certain embodiments, the source is one or more databases 28 employed to receive and store map data, which may be updated on a periodic or iterative basis to ensure data timeliness. In various embodiments, the map data may include various terrain and manmade object locations and elevations and may be stored in the memory 16 or in the one or more databases 28, and referenced by the program 36. In various embodiments, these databases 28 may be available online and accessible remotely by a suitable wireless communication system, such as the communication system 24.

The sensors 22 supplies various types of data and/or measurements to the controller 12. In various embodiments, the sensors 22 supplies, without limitation, one or more of: inertial reference system measurements providing a location, Flight Path Angle (FPA) measurements, airspeed data, groundspeed data, vertical speed data, vertical acceleration data, altitude data, attitude data including pitch data and roll measurements, yaw data, data related to ownship weight, time/date information, heading information, data related to atmospheric conditions, flight path data, flight track data, radar altitude data, geometric altitude data, wind speed and direction data for the ownship 10 and/or for other aircraft. In various embodiments, the sensors 22 include, for example, one or more cameras (e.g., optical, infrared, and/or thermal cameras) configured to sense other in-air aircraft. Further, in certain embodiments of the system 100, the controller 12, and the other components of the system 100 may be included within or cooperate with any number and type of systems commonly deployed onboard aircraft including, for example, an FMS, an Attitude Heading Reference System (AHRS), an Instrument Landing System (ILS), and/or an Inertial Reference System (IRS).

With continued reference to FIG. 1, the display device 32 can include any number and type of image generating devices on which one or more avionic displays 34 may be produced. In various embodiments, the display device 32 may be affixed to the static structure of the aircraft 10 cockpit as, for example, a Head Down Display (HDD) or Head Up Display (HUD) unit. Alternatively, the display device 32 may assume the form of a movable display device (e.g., a pilot-worn display device) or a portable display device, such as an Electronic Flight Bag (EFB), a laptop, or a tablet computer carried into the aircraft 10 cockpit by a pilot.

At least one avionic display 34 is generated on display device 32 during operation of the system 100. The term "avionic display" as used herein is synonymous with the terms "aircraft-related display" and "cockpit display" and encompasses displays generated in textual, graphical, cartographical, and other formats. The system 100 can generate various types of lateral and vertical avionic displays 34 on which symbology, text annunciations, and other graphics pertaining to flight planning are presented for a pilot to view. The display device 32 is configured to continuously render at least one avionic display 34 showing a terrain environment at a current location of the aircraft 10. The avionic display 34 generated and controlled by the system 100 can include alphanumerical input displays of the type commonly presented on the screens of multi-function control and display units (MCDUs), as well as Control Display Units (CDUs) generally. Specifically, certain embodiments of the avionic displays 34 include one or more two dimensional (2D) avionic displays, such as a horizontal (i.e., lateral) navigation display or vertical navigation display; and/or on one or more three dimensional (3D) avionic displays, such as a Primary Flight Display (PFD) with Synthetic Vision background or an exocentric 3D avionic display.

In various embodiments, a human-machine interface, such a touch screen display, is implemented as an integration of the user interface 18 and the display device 32. Via various display and graphics systems processes, the controller 12 may command and control the touch screen display generating a variety of graphical user interface (GUI) objects or elements, for example, buttons, sliders, and the like, which are used to prompt a user to interact with the human-machine interface to provide user input, and to activate respective functions and provide user feedback, responsive to received user input at the GUI element.

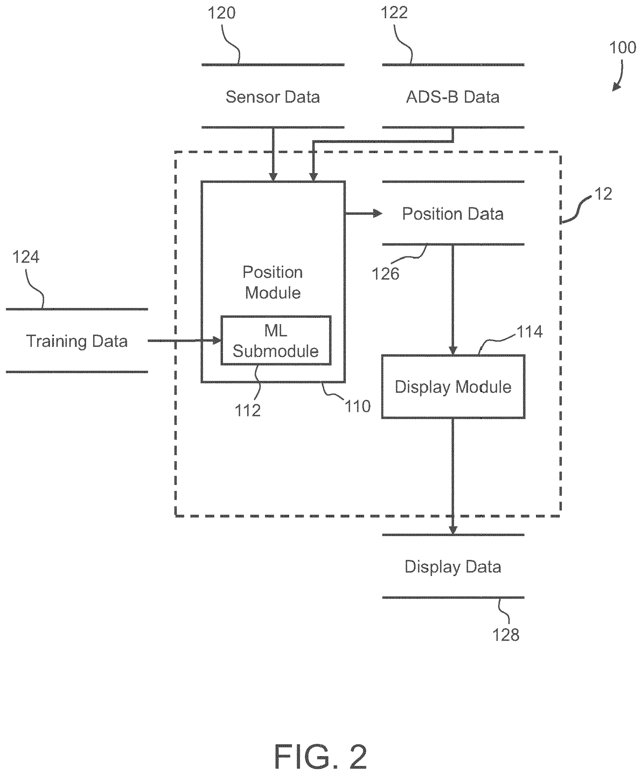

With reference to FIG. 2 and with continued reference to FIG. 1, a dataflow diagram illustrates elements of the system 100 of FIG. 1 in accordance with various embodiments. As can be appreciated, various embodiments of the system 100 according to the present disclosure may include any number of modules embedded within the controller 12 which may be combined and/or further partitioned to similarly implement systems and methods described herein. Furthermore, inputs to the system 100 may be received from other control modules (not shown) associated with the aircraft 10, and/or determined/modeled by other sub-modules (not shown) within the controller 12. Furthermore, the inputs might also be subjected to preprocessing, such as sub-sampling, noise-reduction, normalization, feature-extraction, missing data reduction, and the like. In various embodiments, the system 100 includes a position module 110, a machine learning submodule 112, and a display module 114.

In various embodiments, the position module 110 receives as input sensor data 120 generated by the sensors 22 and external source data, in this example, ADS-B data 122, receive via the communication system 24 from the one or more external sources 40. The sensor data 120 includes various data indicating a sensed 3D position of a target aircraft, for example, based on radar and/or optical imaging. The ADS-B data 122 includes various data indicating a tracked 3D position of the target aircraft received from an ADS-B system external to the ownship 10.

The position module 110 performs an analysis of the sensor data 120 and the ADS-B data 122 to determine a real-time 3D position of the target aircraft. In various embodiments, the determination may be based on one or both of the sensor data 120 and the ADS-B data 122. For example, if the sensor data 120 is determined to be reliable, the real-time 3D position may be based exclusively on the sensor data 120. Alternatively, if the sensor data 120 is determined to be unreliable (e.g., the sensors 22 cannot sense the target aircraft with sufficient clarity, continuity, etc.), then the real-time 3D position may be based exclusively on the ADS-B data 122. In various embodiments, the reliability of the sensor data 120 may be based on certified sensor historical data. In various embodiments, the reliability of the sensor data 120 may consider the circumstances during collection (e.g., specific weather, airborne maneuvering statue, etc.) and/or the specific sensors 22 that collected the sensor data 120. In various embodiments, the real-time 3D position may be based primarily on the sensor data 120 with the ADS-B data 122 used to improve the accuracy of the sensor data 120. For example, if the sensors 22 are able to sense the target aircraft but experiences intermediate unreliability (e.g., heavy cloud cover), the ADS-B data 122 may be used to supplement the sensor data 120 and fill any gaps in the determination and/or tracking of the real-time 3D position of the target aircraft.

In various embodiments, the position module 110 includes the machine learning submodule 112 that is configured to determine a predicted 3D position of the target aircraft based on the tracked 3D position indicated in the ADS-B data 122 as adjusted with compensation parameters. In various embodiments, the machine learning submodule 112 is pre-trained with training data 124 that includes various data indicating a plurality of sensed 3D positions of one or more in-air aircraft as sensed with one or more of the sensors 22 (or equivalent systems) and corresponding tracked 3D positions of the one or more in-air aircraft received from another source external to the ownship 10 (e.g., corresponding ADS-B data). Various types of machine learning algorithms such as, but not limited to, linear regression, decision tree, support vector machine, etc.

During operation of the ownship 10, the machine learning submodule 112 performs an analysis of the ADS-B data 122 and uses compensation parameters to determine the predicted 3D position of the target aircraft. For example, direct reliance on ADS-B data typically results in a delay, and therefore a mismatch, between the tracked 3D position and the actual, real-time 3D position of the target aircraft. The trained machine learning submodule 112 may use the compensation parameters to adjust the tracked 3D position to determine the predicted 3D position, which preferably more closely matches the actual real-time 3D position of the target aircraft. In various embodiments, the compensation parameters may include a vertical adjustment factor and a lateral adjustment factor. In such embodiments, the vertical adjustment factor may be determined, for example, based on a relative altitude and a relative vertical speed between the ownship 10 and the target aircraft, and the lateral adjustment factor may be determined, for example, based on a relative latitude, a relative longitude, and a relative tracking angle between the ownship 10 and the target aircraft. In various embodiments, the relative tracking angle may be based on a view from a cockpit of the ownship 10. In various embodiments, the target aircraft may be displayed at different positions on the display 34 and at different angles relative to the ownship trajectory. In various embodiments, the sensed 3D position of the target aircraft is sensed with an optical camera system of the ownship 10, and the compensation parameters are based, at least in part, on a relative position of the target aircraft within view ranges of the optical camera system. In various embodiments, the data collected with the optical camera system may be converted to a fixed coordinate system, and the position of the target aircraft within the fixed coordinate system is considered in determination of the sensed 3D position of the target aircraft.

In various embodiments, if the compensation parameters are determined to be sufficiently reliable, the real-time 3D position to be displayed can be determined more heavily, primarily, or solely on the predicted 3D position. In various embodiments, the reliability of the compensation parameters may be determined based on one or more data set thresholds indicating, for example, training data set sizes sufficient to generate accurate compensation parameters. In various embodiments, the reliability of the compensation parameters may be determined based on one or more error thresholds indicating, for example, acceptable deviations between the predicted 3D position and the real-time 3D position. In various embodiments, if the sensor 3D position cannot be determined (e.g., sensor error, poor quality sensor data, etc.), the displayed real-time 3D position may be determined solely based on the predicted 3D position.

Once the real-time 3D position of the target aircraft has been determined, based on the sensed 3D position of the sensor data 120, the predicted 3D position determined from the ADS-B data 122, or both, the position module 110 generates position data 126 that includes various data indicating the real-time 3D position of the target aircraft.

In various embodiments, the display module 114 receives as input the position data 126 generated by the position module 110. The display module 114 generates display data 128 that includes various data indicating instructions to the display device 32 for rendering a tracking icon on the display 34 that indicates the real-time 3D position of the target aircraft.

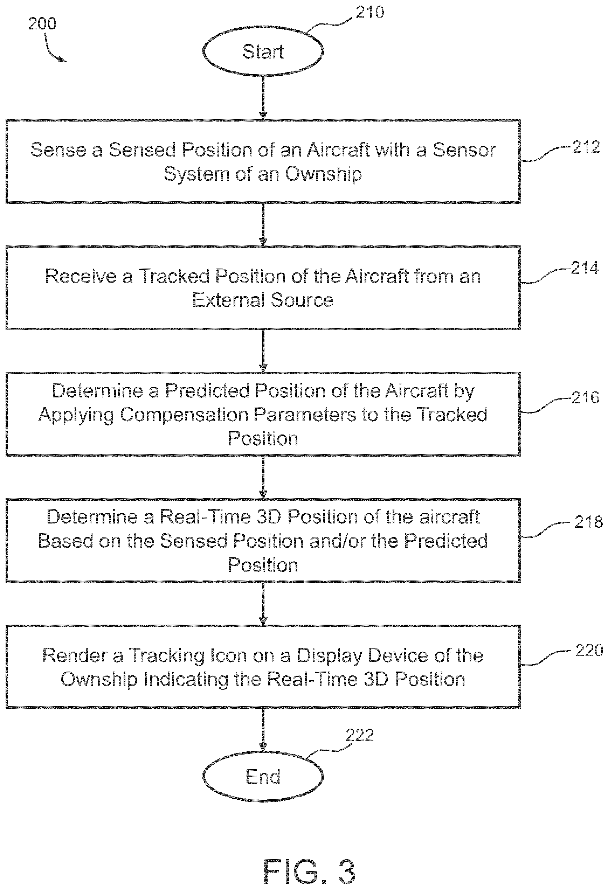

The systems disclosed herein, including the system 100, provide for methods of indicating real-time three-dimensional (3D) position(s) of one or more target aircraft on a display device of an ownship. For example, FIG. 3 is a flow chart illustrating an exemplary method 200. The method 200 may start at 210. At 212, the method 200 may include sensing a sensed 3D position of a target aircraft from a sensor system (e.g., the sensors 22) of an ownship. At 214, the method 200 may include receiving a tracked 3D position of the target aircraft from an external source (e.g., the one or more external sources 40). At 216, the method 200 may include determining a predicted position of the target aircraft by applying compensation parameters to the tracked 3D position. The compensation parameters may be determined using a trained machine learning algorithm that is trained based on comparisons between sensed 3D positions of one or more in-air aircraft as sensed by the sensor system and the corresponding tracked 3D positions as received from the external source. At 218, the method 200 may include determining a real-time 3D position of the target aircraft based on the sensed 3D position and/or the predicted 3D position. At 220, the method 200 may include rendering a tracking icon on a display device of the ownship based on the sensed 3D position and/or the predicted 3D position. The method 200 may end at 222.

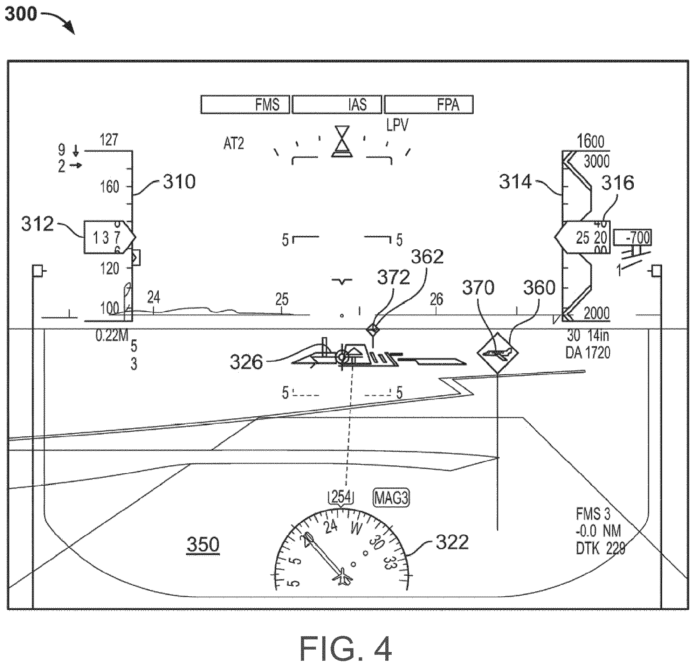

FIG. 4 present a nonlimiting example of the avionic display 34, referred to herein as a primary flight display (PFD) 300, generated on the display device 32. The PFD 300 includes various graphical elements including, but not limited to, a compass 322; an airspeed indicator or "airspeed tape" 310, which features a precision readout window 312; an altitude indicator or "altitude tape" 314, which features a precision readout window 316; and a flight path vector graphic or flight path marker (FPM) 326, which moves across the PFD 300 to reflect changes in the flight path of the aircraft 10.

The PFD 300 is a perspective view Synthetic Vision System (SVS) display including graphical renderings of terrain and other geographical features representing the view from the cockpit under ideal visibility conditions (a so-called "glass cockpit" view). The simulated "glass cockpit" view produced on the PFD 300 thus includes an environmental graphic 350, which represents a first-person view of a real terrain environment which the aircraft 10 is presently approaching (typically oriented in or limited to a forward field of view relative to the aircraft 10).

Additionally, the PFD 300 includes tracking icons 360 and 362 configured to dynamically track and indicate positions of other corresponding target aircraft 370 and 372, respectively, in real-time. The tracking icons 360 and 362 are not limited to any specific shape, size, color, or other property. In this example, the tracking icons 360 and 362 each include a diamond shaped icon with a vertical line extending therebelow to the ground (e.g., to indicate altitude). In various embodiments, including the example of FIG. 4, the tracking icons 360 and 362 enclose the target aircraft 370 and 372, respectively, when viewed by the pilot from the cockpit of the ownship 10.

The systems and methods disclosed herein provide various benefits and/or improvements to mobile platform systems, such as Synthetic Vision Systems (SVS) of aircraft that include 3D in-air traffic systems. For example, processing delays related to receiving, processing, and rendering target aircraft positions based on ADS-B data can result in a mismatch between the tracked 3D positions of the target aircraft and the actual, real-time 3D positions of the target aircraft. The systems and methods provided herein improve 3D in-air traffic systems such that target aircraft are more accurately tracked. In particular, the systems determine a predicted 3D position of the target aircraft by adjusting a tracked 3D position provided by an external source with compensation parameters. The compensation parameters are determined based on a trained machine learning algorithm that is trained based on comparisons between a plurality of sensed 3D positions of one or more in-air aircraft and a corresponding plurality of tracked 3D positions of the in-air aircraft as received from the external source. The systems determine the real-time 3D position of the target aircraft based on the sensed 3D position and/or the predicted 3D position, and render a tracking icon on the display device that indicates the real-time 3D position of the target aircraft. In various situations, the positioning of the tracking icon on the display device may be significantly more accurate than systems that, for example, rely solely on the tracked 3D position provided by an external source.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system onboard an ownship, the system comprising:
a display device;
a sensor system configured to sense a sensed three-dimensional (3D) position of a target aircraft that is in-air;
a communication system configured to receive in-air traffic position data from an external source external to the ownship, wherein the in-air traffic position data includes a tracked 3D position of the target aircraft; and
an in-air traffic tracking system that includes a controller that is in operable communication with the display device, the sensor system, and the communication system, and that is configured to, by a processor:
determine a predicted 3D position of the target aircraft by adjusting the tracked 3D position with compensation parameters, wherein the compensation parameters are determined based on a trained machine learning algorithm that is trained based on comparisons between a plurality of sensed 3D positions of in-air aircraft and a corresponding plurality of tracked 3D positions of the in-air aircraft as received from the external source;
determine a real-time 3D position of the target aircraft based on the sensed 3D position and/or the predicted 3D position; and
render a tracking icon on the display device that indicates the real-time 3D position of the target aircraft.

2. The system of claim 1, wherein the real-time 3D position of the target aircraft is based on both the sensed 3D position and the predicted 3D position.

3. The system of claim 1, wherein to determine the real-time 3D position of the target aircraft, the controller is configured to, by the processor:
determine whether the sensed 3D position of the target aircraft is reliable;
determine the real-time 3D position of the target aircraft based, at least in part, on the sensed 3D position upon a determination that the sensed 3D position is reliable; and
determine the real-time 3D position of the target aircraft based solely on the predicted 3D position in response to a determination that the sensed 3D position is not reliable.

4. The system of claim 1, wherein to determine the real-time 3D position of the target aircraft, the controller is configured to, by the processor:
determine that the compensation parameters are sufficiently reliable relative to an error threshold or a data set threshold; and
determine the real-time 3D position of the target aircraft based primarily or solely on the predicted 3D position in response to a determination that the compensation parameters are sufficiently reliable.

5. The system of claim 1, wherein the sensor system includes an optical camera system and a radar system, and the controller is configured to, by the processor, sense the sensed 3D position of the target aircraft with the optical camera system and the radar system, wherein the controller is configured to, by the processor, base the compensation parameters, at least in part, on a relative position of the target aircraft within view ranges of the optical camera system.

6. The system of claim 1, wherein the external source is an Automatic Dependent Surveillance - Broadcast (ADS-B) system, the in-air traffic position data is ADS-B data transmitted by the ADS-B system, and the communication system includes an ADS-B receiver configured to wirelessly receive the ADS-B data from the ADS-B system.

7. The system of claim 1, wherein the controller is configured to, by the processor:
determine a vertical adjustment factor of the compensation parameters based on a relative altitude and a relative vertical speed between the ownship and the target aircraft; and
determine a lateral adjustment factor of the compensation parameters based on a relative latitude, a relative longitude, and a relative tracking angle between the ownship and the target aircraft, wherein the controller is configured to, by the processor, determine the relative tracking angle based on a view from a cockpit of the ownship.

8. A method for indicating a real-time three-dimensional (3D) position of a target aircraft that is in-air on a display device onboard an ownship, the method comprising:
sensing, with a sensor system onboard the ownship, a sensed three-dimensional (3D) position of the target aircraft;
receiving, with a communication system onboard the ownship, in-air traffic position data from an external source that is external to the ownship that includes a tracked 3D position of the target aircraft;
determining, by a processor onboard the ownship and in operable communication with the sensor system, the communication system, and the display device, a predicted 3D position of the target aircraft by adjusting the tracked 3D position with compensation parameters, wherein the compensation parameters are determined based on a trained machine learning algorithm that is trained based on comparisons between a plurality of sensed 3D positions of in-air aircraft and a corresponding plurality of tracked 3D positions of the in-air aircraft as received from the external source;
determining, by the processor, the real-time 3D position of the target aircraft based on the sensed 3D position and/or the predicted 3D position; and
rendering, by the processor, a tracking icon on the display device that indicates the real-time 3D position of the target aircraft.

9. The method of claim 8, wherein determining the real-time 3D position of the target aircraft is based on both the sensed 3D position and the predicted 3D position.

10. The method of claim 8, wherein determining the real-time 3D position of the target aircraft includes:
determining, by the processor, whether the sensed 3D position of the target aircraft is reliable;
determining, by the processor, the real-time 3D position of the target aircraft based on the sensed 3D position upon a determination that the sensed 3D position is reliable; and
determining, by the processor, the real-time 3D position of the target aircraft based on the predicted 3D position in response to a determination that the sensed 3D position is not reliable.

11. The method of claim 8, wherein to determining the real-time 3D position of the target aircraft includes:
determining, by the processor, that the compensation parameters are sufficiently reliable relative to an error threshold or a data set threshold; and
determining, by the processor, the real-time 3D position of the target aircraft based primarily or solely on the predicted 3D position in response to a determination that the compensation parameters are sufficiently reliable.

12. The method of claim 8, wherein sensing the sensed three-dimensional (3D) position of the target aircraft is performed with an optical camera system and a radar system onboard the ownship, wherein the compensation parameters are determined based, at least in part, on a relative position of the target aircraft within view ranges of the optical camera system.

13. The method of claim 8, wherein the external source is an Automatic Dependent Surveillance - Broadcast (ADS-B) system.

14. The method of claim 8, wherein the compensation parameters include a vertical adjustment factor determined based on a relative altitude and a relative vertical speed between the ownship and the target aircraft, and a lateral adjustment factor determined based on a relative latitude, a relative longitude, and a relative tracking angle between the ownship and the target aircraft.

15. The method of claim 14, wherein the relative tracking angle is determined based on a view from a cockpit of the ownship.
